# EUROPEAN PATENT APPLICATION

(11) **EP 1 736 877 A2**
(43) Date of publication of application: **27.12.2006**
(21) Application number: 06011141.6
(22) Date of filing: 30.05.2006
(51) Int. Cl.: G06F 9/46

(54) **Symmetric multi-processor system and method for distributing interruption in the same**

(30) Priority: 31.05.2005 JP 2005160185
(71) Applicant: NEC Electronics Corporation, Kawasaki, Kanagawa 211-8668 (JP)
(72) Inventor: Itou, Yoshiyuki, Kawasaki Kanagawa 211-8668 (JP)
(74) Representative: Glawe, Delfs, Moll

(57) **Abstract**

A multi-processor system includes an interrupt controller (104) configured to store a table indicating a set of an external device issuing an access request and a processor corresponding to the access request; and a plurality of processors (101), on each of which an operating system (OS) is executed-A first processor of the plurality of processors receives the access request from the external device through the interrupt controller; and a second processor of the plurality of processors receives the access request from the external device without passing through the interrupt controller.

## Description

### Background of the Invention

### 1. Field of the Invention

The present invention relates to a symmetric multi-processor system and a method for distributing an interruption in the symmetric type multi-processor system.

### 2. Description of the Related Art

In recent years, as a method of instructing a processor to carry out a high performance process in despite of a small electric power consumption, a multi-processor system of a plurality of processors operating in parallel is known. In this multi-processor system, there are a symmetric multi-processor system (SMP) in which the plurality of processors of a same type are used, and an asymmetric multi-processor system (ASMP) in which the plurality of processors of different types are combined and used.

One example of a conventional SMP system is described in "Base And Application of OS" by A. S. Tanenbaum published from Prentice Hall Toppansha. The conventional SMP system requires an OS (operating system) for a multi-processor and hardware for the multi-processor. In short, in the conventional SMP system, a system for a single processor cannot be adapted for the SMP system with no change. For this reason, when the conventional SMP system is used, the software and hardware for the SMP system must be again developed, which results in a problem of a long development period.

Also, in the conventional SMP system, when an interruption process to a data inputted from a peripheral device is executed by processors, the respective processors are required to be exclusively controlled such that the reception of the data from the peripheral device and the interruption process are not competed between the processors. When the conventional SMP system receives the data from the peripheral device and executes the interruption process, the interruption process to the data from the peripheral device is registered as a wait process once for the exclusive control. Depending on the number of the wait processes, the time period until the interruption process to the data from the peripheral device is ended becomes inconstant. For this reason, an interruption response time performance when the processor receives the data from the peripheral device and executes the interruption process becomes inconstant. As a result, a problem is caused that the interruption response time performance cannot be defined.

On the contrary, a task parallel type multi-processor system as an ASMP system using an OS for a single processor is disclosed in Japanese Laid Open Patent Application (JP-P2004-302837A). According to the task parallel type multi-processor system, the OS and applications which are developed for the single processor can be adapted to the multi-processor system.

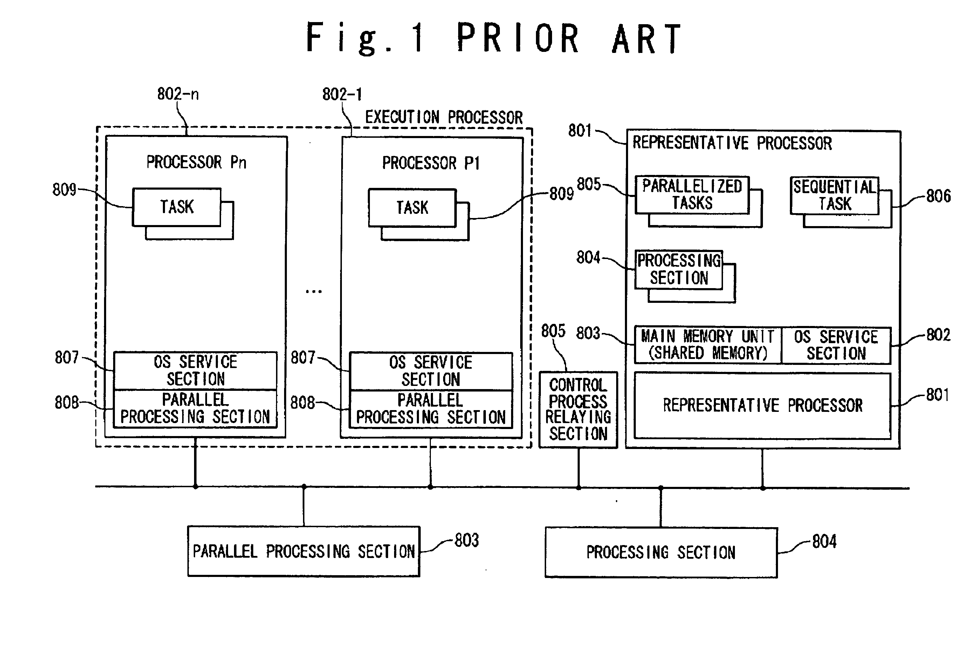

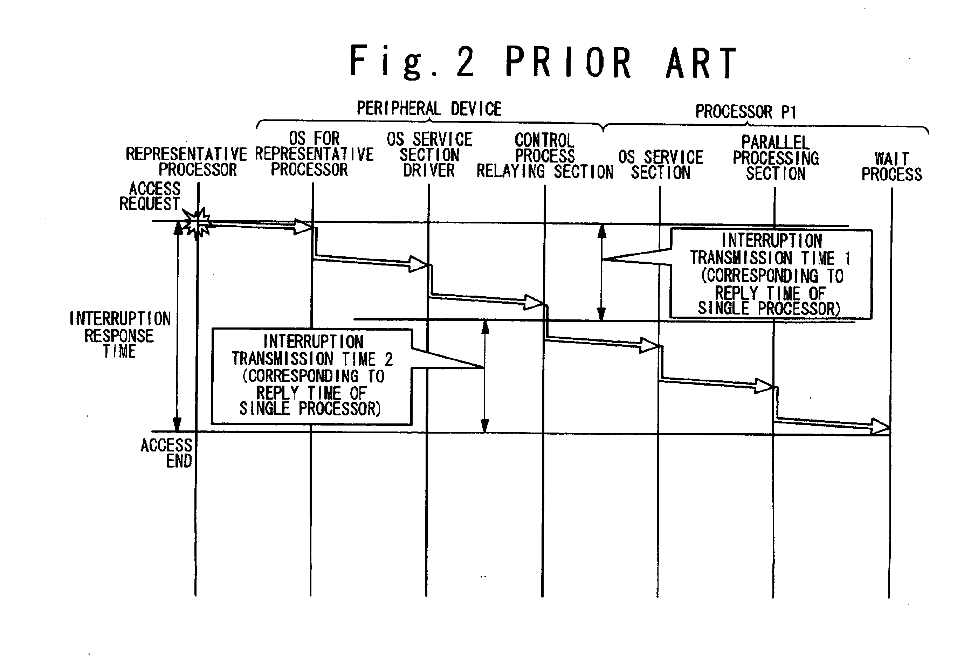

Fig. 1 shows the conventional task parallel type multi-processor system. The conventional task parallel type multi-processor system has a representative processor and processors. The transmission and reception between the respective processors and the peripheral device are controlled by the representative processor. In the task parallel type multi-processor system, the reception and interruption processes for the data from the peripheral device are executed by the representative processor. Fig. 2 shows a transmission time of a data from the peripheral device to a processor 1. As shown in Fig. 2, an overhead corresponding to a process time by the representative processor is generated for the interruption response time performance of the single processor. Thus, the task parallel type multi-processor system has a problem that the interruption response time is delayed although the execution time of an application is made faster by the plurality of processors.

### Summary of the Invention

An object of the present invention is to provide a multi-processor system in which an operating system (OS) and hardware for a single processor can be used.

Another object of the present invention is to provide a multi-processor system in which an interruption response time for an access request from an external device can be made equal to that of a single processor system.

In an aspect of the present invention, a multi-processor system includes an interrupt controller (104) configured to store a table indicating a set of an external device issuing an access request and a processor corresponding to the access request; and a plurality of processors (101), on each of which an operating system (OS) is executed. A first processor of the plurality of processors receives the access request from the external device through the interrupt controller; and a second processor of the plurality of processors receives the access request from the external device without passing through the interrupt controller.

Also, the multi-processor system may further include an external device controller connected to the external device. The access request may be transferred from the external device to the first processor through the external device controller and the interrupt controller, and the access request may be transferred from the external device to the second processor through the external device controller without passing through the interrupt controller.

Also, each of the first and second processors may have a same configuration, and may includes:
an external device control driver configured to control the external device;
an interruption processing driver configured to issue an interruption process request to the OS in response to the access request from the external device; and
an driver arbitration section configured to arbitrate between the external device control drivers of the plurality of processors.

Also, the first and second processors may be connected to each other and operate individually and independently. Also, the OS may be for a single processor system and may be installed in each of the first and second processors.

Also, the first processor may start access to the external device in response to the access request.

Also, the second processor may directly access the external device when the external device control driver monitors the external device and detect that the external device is set to a state equivalent to issuance of the access request.

Also, the driver arbitration section may determine whether the processor is registered in the interrupt controller.

Also, in another aspect of the present invention, a method of distributing an interruption in an multi-processor system, is achieved by receiving an access request destined for a first or second processor of a plurality of processors from an external device; by sending the access request to the first processor through an interrupt controller in an interruption mode; and by sending the access request to the second processor in an monitor mode without passing through the interrupt controller.

Also, the first and second processors may be connected to each other and may operate individually and independently. Also, an operating system (OS) may be for a single processor system, and may be installed in each of the first and second processors.

Also, the method may be achieved by further starting access to the external device from the first processor in response to the access request in the interruption mode.

Also, the method may be achieved by further directly accessing the external device from the second processor in the monitor mode.

Also, the sending the access request to the first processor may be achieved by sending the access request from the external device to the first processor through an external device controller and the interrupt controller. Also, the sending the access request to the second processor may be achieved by sending the access request from the external device to the second processor through the external device controller without passing through the interrupt controller.

### Brief Description of the Drawings

Fig. 1 is a block diagram showing a configuration of a conventional task parallel type multi-processor system;
Fig. 2 is a diagram showing an interruption response time in the conventional task parallel type multi-processor system;
Fig. 3 is a block diagram showing a configuration of a symmetric type multi-processor system according to an embodiment of the present invention;
Fig. 4 is a diagram showing a route of an access request signal of a processor and an external device controller according to the embodiment;
Fig. 5 is a flow chart showing an operation of installing an external device control driver in the embodiment;
Figs. 6A and 6B are a flow chart showing of an interruption processing operation in an interruption mode in the embodiment;
Figs. 7A and 7B are a flowchart showing an interruption processing operation in a monitor mode in the embodiment;
Fig. 8 is a flowchart of a timer interruption monitoring operation in the monitor mode in the embodiment; and
Fig. 9 is an interruption response time in the embodiment.

### Description of the Preferred Embodiments

Hereinafter, a symmetric multi-processor system and a method for distributing an interruption of the present invention will be described in detail with reference to the attached drawings.

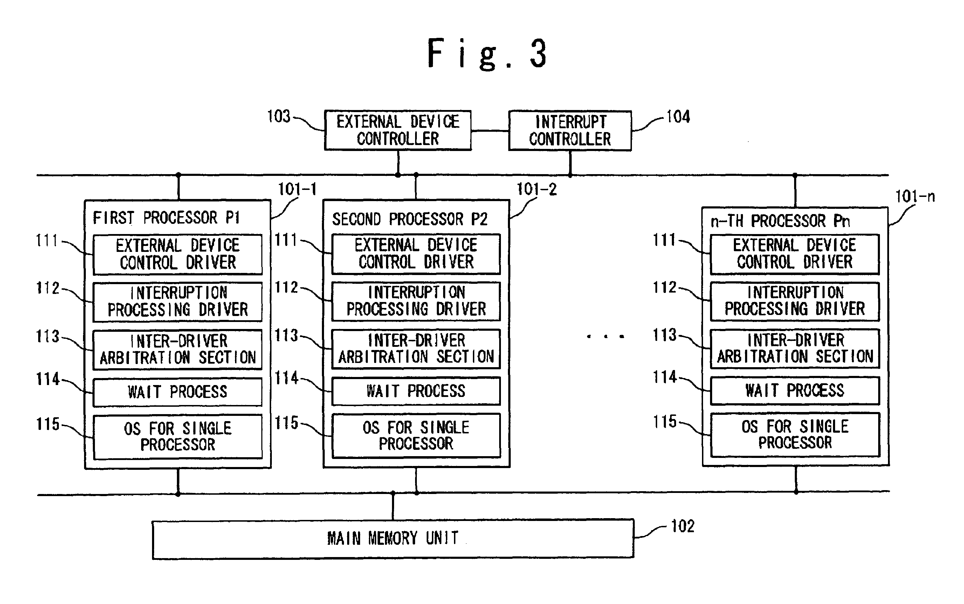

Fig. 3 is a block diagram showing a configuration of the symmetric multi-processor (SMP) system according to an embodiment of the present invention. As shown in Fig. 3, the SMP system according to the embodiment includes a plurality of processors 101 (processor P1 101-1, processor p2 101-2, ..., processor Pn 101-n), a main memory 102, an external device controller 103 and an interrupt controller 104.

The main memory 102 is used by the respective processors 101. The main memory 102 has a shared memory region shared by the respective processors 101, an individual memory region independently used by each processor 101, and a communication region virtually shared in a communication process. Those memory regions can be accessed from each processor 101 without any control such as an exclusive control and a cache control.

The external device controller 103 controls external devices connected to the SMP system and carries out communication between the external device and the processor. The interrupt controller 104 has a programmable table indicating a relation of the external device controlled by the external device controller 103 and the processor corresponding to the external device. In short, by referring to the table, the interrupt controller 104 transmits a signal of an access request from the external device to the processor corresponding to the external device. When the processor corresponding to the external device is not registered in the table as the result of referring to the table, the fact is notified from the interrupt controller 104 to the external device controller 103, which transmits the signal of the access request from the external device to the processor corresponding to the external device. The access request is the signal indicating an interruption request from the external device, a notice of a status change of the external device, and a change of a status indication of the external device. It should be noted that it is possible for the processor to access the external device directly without passing through the external device controller 103.

The plurality of processors P1 to Pn 101-1 to 101-n have a same configuration. Each of the processors P1 to Pn 101-1 to 101-n has an external device control driver 111, an interruption processing driver 112, an inter-driver arbitration section 113, a wait process storage section 114 and an operating system (OS) 115 for a single processor. The detailed description of those blocks will be described later.

The plurality of processors 101 have functions necessary to operate independently of each other. For this reason, when the processor accesses the external device, there is a case that the accesses are competed between the respective processors. In the SMP system according to the embodiment, the competition between the accesses is prevented by setting an interruption mode and a monitor mode when the processor accesses the external device. The interruption mode and the monitor mode will be described later in detail.

The external device control driver 111 controls the external device controller 103 to monitor the status of the external device. The external device control driver 111 may be realized as any function incorporated in the OS, any software, and a function incorporated in the processor to attain the function.

The interruption processing driver 112 drives the wait process storage section 114 of the processor such that an interruption process is executed to the data transmitted from the external device in accordance with the request of the external device controller 103. The interruption processing driver 112 may be realized as any function incorporated in the OS, any software, and a function incorporated in the processor to attain the function.

The inter-driver arbitration section 113 carries out the arbitration between the external device control driver 111 of a different processor and the external device control driver 111 of a self-processor when the external device control driver 111 is read in. In which of the interruption mode and the monitor mode the processor should operate is determined through this arbitrating operation.

The wait process storage section 114 stores the wait processes to be executed by the self-processor. Each processor operates as a single processor. The wait processes to be executed by the processor are stored in the wait process storage section 114 in an execution wait order.

The OS 115 for the single processor transmits instructions from various applications to the processors 101 and responses the results processed by the processors 101 to the applications. Also, this controls the basic operations in the processor.

An interruption mode and a monitor mode will be described below in detail. The interruption mode is a mode in which an access request issued from the external device is transmitted through the interrupt controller 104 to the processors 101. In this mode, the processor 101 accesses the external device in response to the access request. For this reason, the processor 101 in the interruption mode does not monitor the external device. It is supposed that the processor 101 in the interruption mode is referred to as a first processor, for example.

The monitor mode is a mode in which the processor periodically monitors the access request transmitted from the external device. Also, the processor 101 which is not registered in the table of the interrupt controller 104 is set to the monitor mode. The processor 101 in the monitor mode monitors the access request from the external device and carries out an operation corresponding to the access request. This monitoring is not limited to a periodical monitoring. For example, the monitoring may be irregular or continuous. Also, it is possible to combine them to properly change them. The processor in the monitor mode is referred to as a second processor.

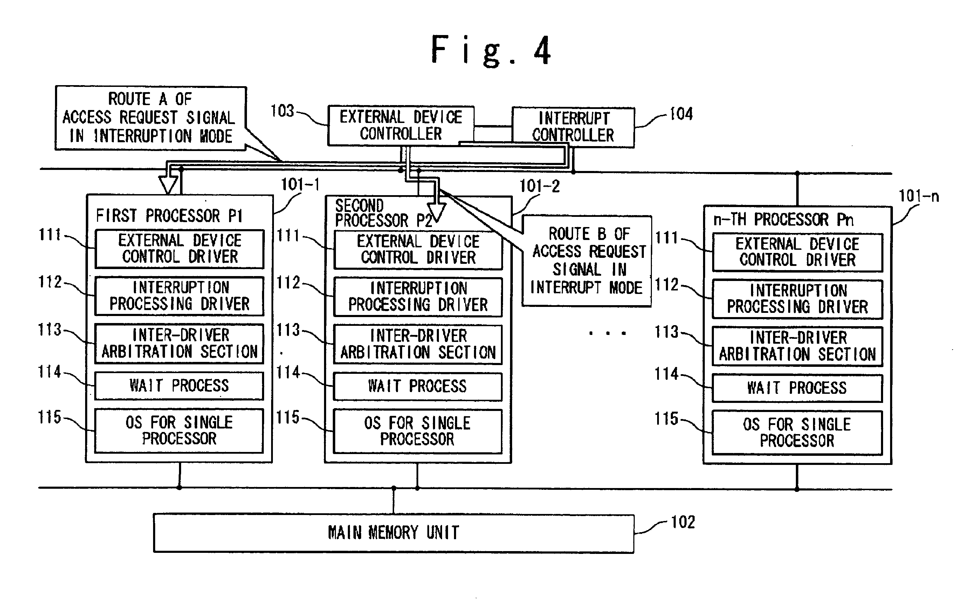

Fig. 4 shows a flow of an access request signal when the processor P1 is set to the interruption mode as the first processor, and the processor P2 is set to the monitor mode as the second processor. As shown in Fig. 2, the access request signal in the interruption mode is transmitted through the interrupt controller 104 to the processor P1 (Route A). The access request signal in the monitor mode is directly transmitted from the external device controller 103 to the processor P2 (Route B).

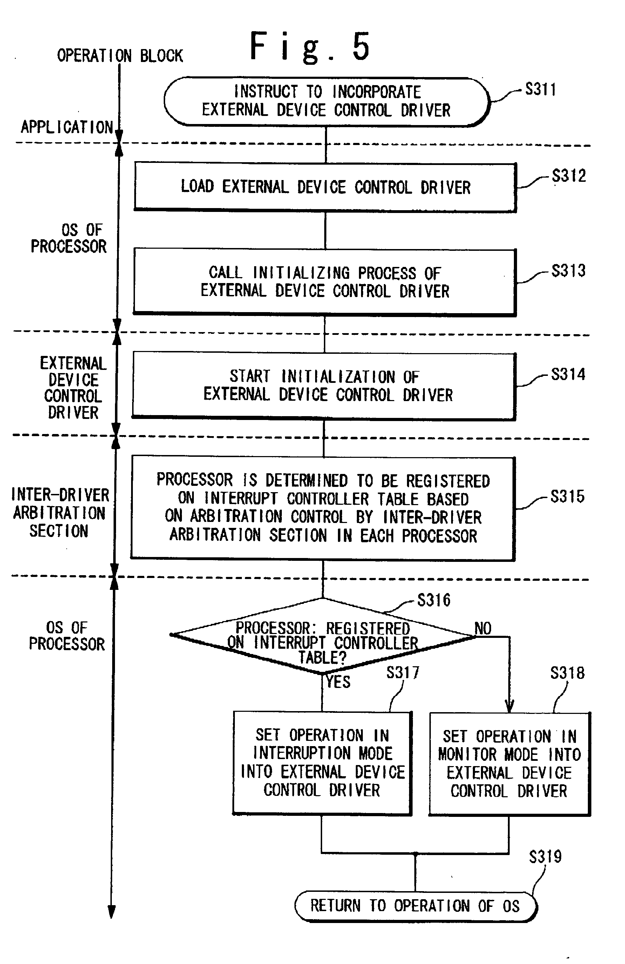

The switching of between the interruption mode and the monitor mode is carried out when the external device control driver 111 is installed into the processor. Fig. 5 shows a flowchart of the installation of the external device control driver 111. The installation of the external device control driver 111 will be described below with reference to Fig. 5.

At first, the application issues an installation instruction of the external device control driver 111 to the OS of each processor (Step S311). The OS 115 of the processor reads the external device control driver 111 in response to the instruction from the application (Step S312). Subsequently, the OS 115 of the processor calls an initializing process of the external device control driver 111 (Step S313).

The external device control driver 111 initializes the external device control driver 111 in response to an instruction from the OS 115 of the processor (Step S314). In response to this initialization, the inter-driver arbitration section 113 of each processor executes the arbitrating operation for determining which of the processors to be registered in the table of the interrupt controller 104 (Step S315) .

In response to the operation of the step S315, the OS 115 of the processor determines whether or not the self-processor is registered in the table of the interrupt controller 104 (Step S316). As the determination result of the step S316, if the self-processor is registered in the table of the interrupt controller 104, the external device control driver 111 is set to the interruption mode (Step S317). As the result of the step S316, if the self-processor is not registered in the table of the interrupt controller 104, the external device control driver 111 is set to the monitor mode (Step S318). When the step S317 or Step S318 is ended, the OS of the processor is returned to the usual operation. Through this operation, the interrupt controller 104 can modify the table in the programmable manner.

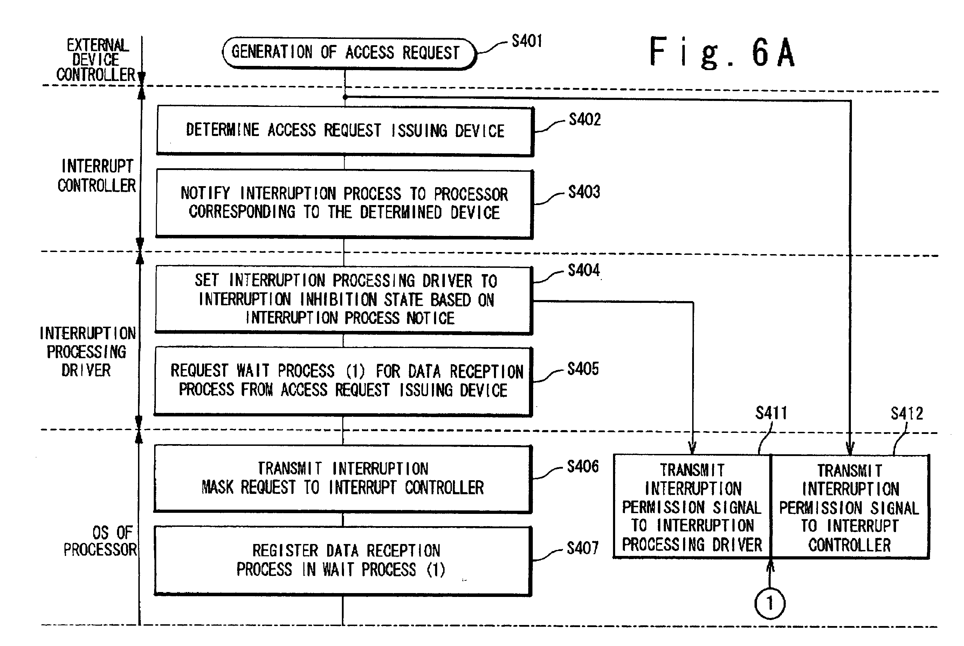

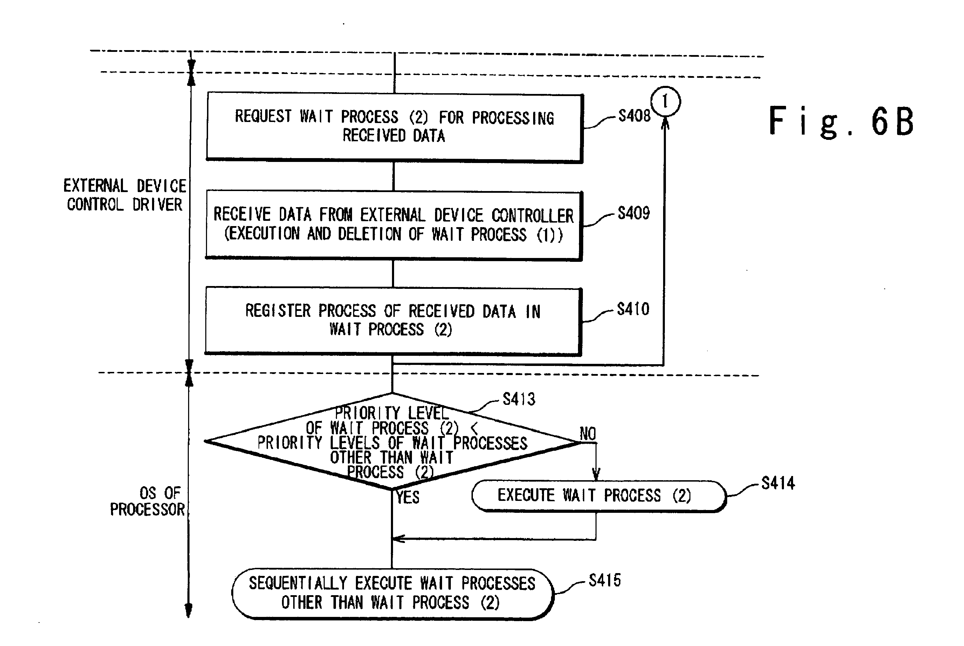

The interruption mode and the monitor mode will be described below in detail. At first, Figs. 6A and 6B show an example of a flowchart showing communication between the external device and the processor in case of the interruption mode. The operations of the interruption mode will be described below with reference to Figs. 6A and 6B.

At first, the external device controller 103 transmits an access request to the interrupt controller 104 (Step S401). The interrupt controller 104 determines a device of an access request source in response to the access request (Step S402). Subsequently, an interruption process notice is issued to the processor corresponding to the determined device based on the table in the interrupt controller 104 (Step S403).

The interruption processing driver 112 of the processor having received the interruption process report is set to an interruption inhibition state in response to the interruption process notice (Step S404). The interruption processing driver 112 rejects an access request from outside in the interruption inhibition state. Thus, the interruption processing driver 112 is set to the state where only the process for the inside is carried out. Subsequently, the interruption processing driver 112 requests a wait process (1) for a receiving process for the data from the external device to the OS 115 of the processor (Step S405).

The OS 115 of the processor transmits an interruption mask request to the interrupt controller 104 in response to the request of the wait process (1) from the interruption processing driver 112 (Step S406). Thus, the setting of the self-processor registered in the table of the interrupt controller 104 becomes temporarily invalid. Subsequently, the OS 115 of the processor registers the data receiving process from the external device in the wait process (1) (Step S407).

At the time of the completion of the step S407, a wait process (2) for processing the data received by the external device control driver 111 is requested to the OS 115 of the processor (Step S408). After that, the external device control driver 111 receives the data from the external device (Step S409). Consequently, the wait process (1) is executed and deleted. The data received by the external device control driver 111 is registered in the wait process (2), and the execution of the process is waited (Step 5410) .

Here, because of the completion of the data reception from the external device, the external device control driver 111 transmits a signal for an interruption permission to the interruption processing driver 112 and the interrupt controller 104 (Steps S411 and S412). Thus, the interruption processing driver 112 and the interrupt controller 104 are set to the state in which a next access request can be received.

A priority level is assigned to the process registered in the wait process (2). The processor executes the process from the wait process having the high priority level. For this reason, the priority level of the wait process (2) subjected to the interruption process is compared with the priority levels of the other wait processes, and the priority levels are sorted (Step S413). If the priority level of the wait process (2) is the highest at the step S413, the processor executes the process registered in the wait process (2) (Step S414). Also, if there is the wait process having the priority level higher than the priority level of the wait process (2), the wait process is executed (Step S415).

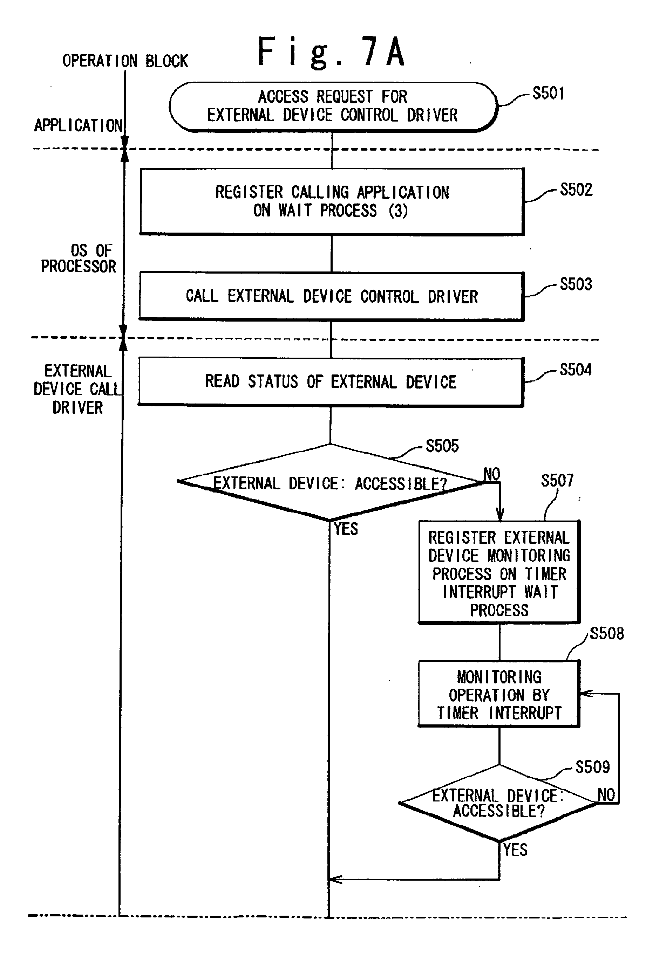

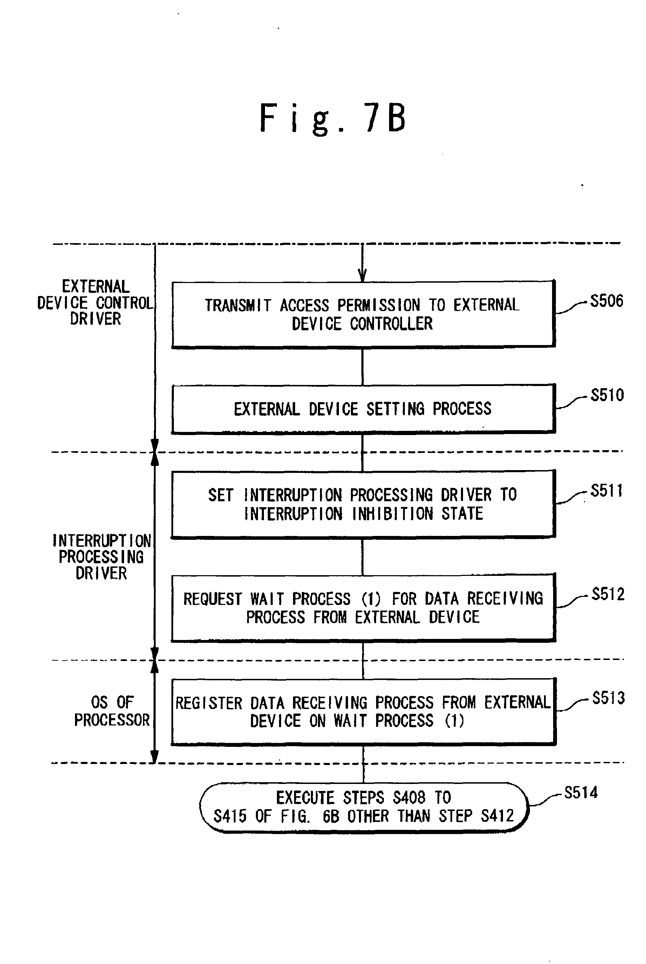

Next, Figs. 7A and 7B show one example of a flowchart of the communication between the processor and the external device in case of the monitor mode. The monitor mode will be described below with reference to Figs. 7A and 7B. In the monitor mode, a case will be described where the access request is issued from not the external device controller 103 but the application.

At first, the application issues the access request to the external device (Step S501). In response to the access request from the application, the OS 115 of the processor registers a call source application in a wait process (3) (Step S502). Subsequently, the OS 115 of the processor calls the external device control driver 111 (Step S503).

The called external device control driver 111 reads the status of the external device (Step S504). As the read result, whether or not the external device can be accessed is determined (Step S505). As a result, if the external device is accessible, the external device control driver 111 transmits a signal of the access permission to the external device controller (Step S506). If the external device is inaccessible at the step S505, the external device control driver 111 registers an external device monitoring process in a timer interruption wait process (Step S507). The external device control driver 111 executes an external device monitoring operation in response to a timer interruption based on the timer interruption wait process (Step S508) and repeats this operation until the external device becomes accessible (Step S509). At the step S509, if the external device becomes accessible, the external device control driver 111 executes the operation of the step S506. The external device control driver 111 executes an external device setting process (Step S510) when transmitting the access permission signal to the external device controller 103. Consequently, the external device set to any of an input mode and an output mode.

Subsequently, the interruption processing driver 112 is set to the interruption inhibition state (Step S511) and requests the wait process (1) for the data receiving process from the external device (Step S512). After that, the OS 115 of the processor registers the data receiving process from the external device in the wait process (1) (Step S513).

The operations after the step S513 are same as those from the step S408 to the step S415 in the flowchart in the interruption mode shown in Figs. 6A and 6B. Thus, their descriptions are omitted. However, the step S412 of the flowchart in the interruption mode has no relation to the interrupt controller in the monitor mode. Therefore, it is removed.

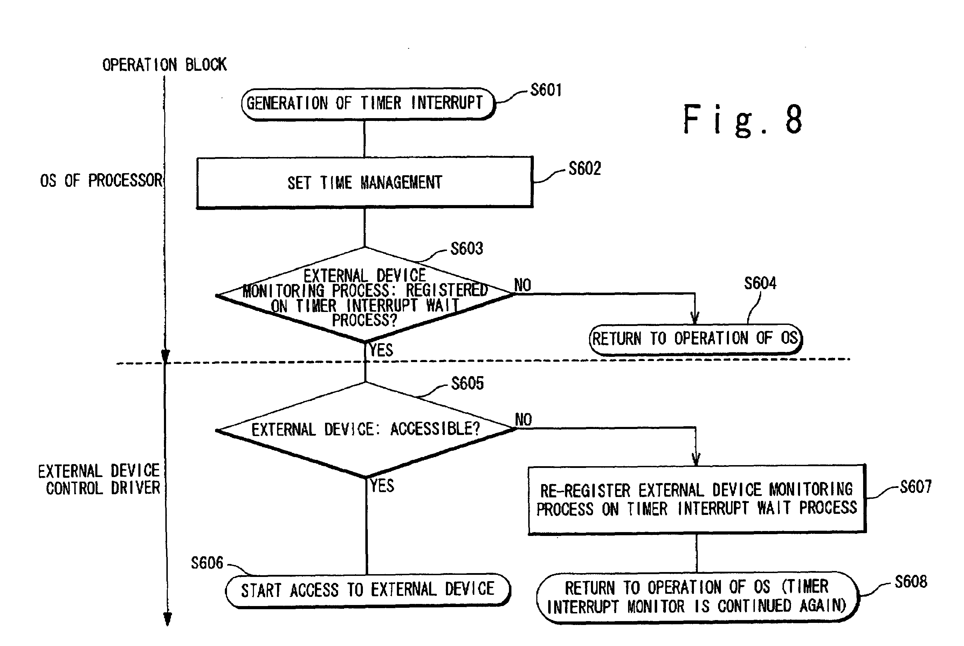

Here, a monitoring operation of the timer interruption at the steps S508, S509 will be described in detail. Fig. 8 shows a flowchart of the timer interruption monitor. In the timer interruption, the OS 115 of the processor executes the timer interruption based on the timer interruption wait process (Step S601). In response to the step S601, a time management is set for the OS 115 of the processor (Step S602). Moreover, the OS 115 of the processor checks whether or not the external device monitoring process is registered in the timer interruption wait process (Step S603). Here, if the external device monitoring process is not registered in the timer interruption wait process, the flow of the process returns to the operation of the OS 115 (Step S604).

If the external device monitoring process is registered in the timer interruption wait process, the external device control driver 111 determines whether or not the external device can be accessed (Step S605). If the access to the external device is possible or permitted, the access to the external device is started (Step S606). Also, the access to the external device is impossible or not permitted, the external device monitoring process is again registered in the timer interruption wait process (Step S607). After that, the control flow returns to the operation of the OS and again continues the timer interruption monitor (Step S608).

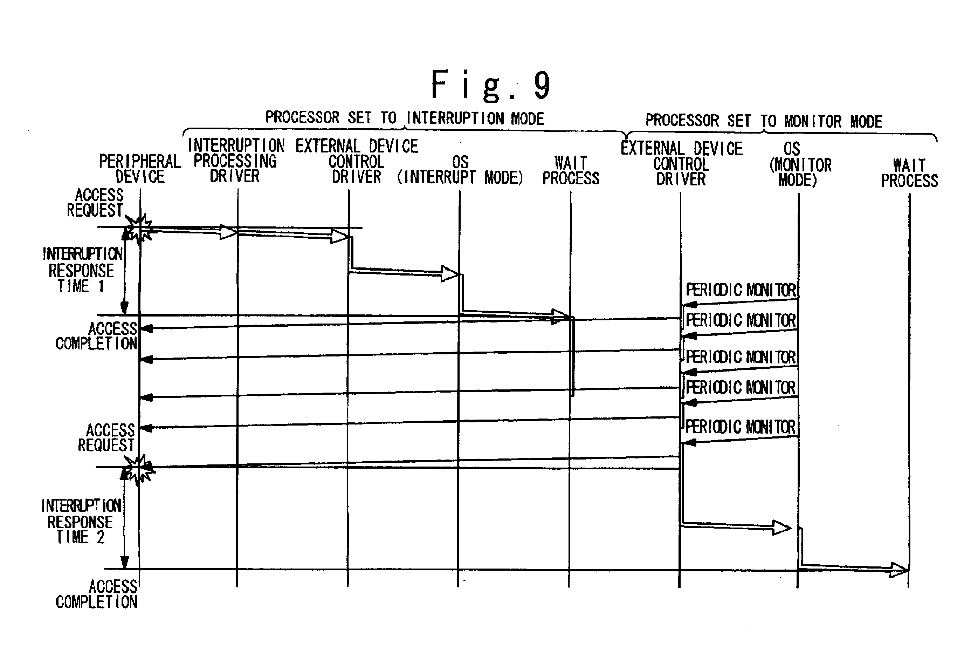

Fig. 9 shows an access time in case of the access to the external device in the interruption mode and in the monitor mode. As shown in Fig. 9, in case of the interruption mode, an interruption response time 1 from issuance of the access request in the external device to the completion of the access does not include a wait time caused by the wait process. This is the time approximately equal to the case of the external device access from the single processor.

Also, an interruption response time 2 from the issuance of the access request in the external device to the completion of the access is the time where the time of the monitoring operation is added to the interruption response time in the single processor.

According to the SMP system according to the embodiment, the processor set to the interruption mode through the interrupt controller and the processor set to the monitor mode are combined. Also, in the interruption mode, the access from the external device controller is distributed based on the table of the interrupt controller. Consequently, even if the access request is issued from the external device, the access to the external device controller is never competed.

In addition, the operation when the processor executes the access to the external device controller is subject to the procedures substantially similar to those of the system of a single processor. Thus, an inconstant time is not included in the access time, unlike the conventional SMP system. Thus, a problem does is not brought that the interruption response time is inconstant. Also, in the task parallel type multi-processor system, the access to the external device is executed through a representative processor. However, in the SMP system according to the embodiment, each of the processors directly transmits and receives the data to and from the external device controller. For this reason, in the SMP system according to the embodiment, the delay in the data transmission and reception is never caused, which exists in the task parallel type multi-processors.

Thus, according to the SMP system of the embodiment, the interruption response time to the access request of the external device can be made faster than those of the conventional SMP system and the conventional task parallel type multi-processor. Also, even if the OS installed in the processor is an OS for the single processor, the access to the external device is never competed. Thus, the OS for the single processor and the application for the single processor can be easily ported to the multi-processor system. Moreover, according to the SMP system according to the embodiment, it is not necessary to prepare the hardware for the multi-processors such as a snoop cache. In view of this fact, it is possible to reduce the development period of the multi-processor system.

Also, the present invention is not limited to the embodiment. The present invention can be suitably modified. For example, the connection between the external device controller and the processor may be the connection for exclusively controlling the access of the processor for the external device controller or may be the connection through which the plurality of processors can execute the accesses at the same time. Also, the interrupt controller may be connected in the same manner as the external device controller. Moreover, the wait process may use a delaying process of the OS or may use the interruption process itself.

Moreover, the embodiment has been described under the assumption of the OS environment. However, in case of the system where an application layer and a driver layer are separated or installed as different processes, even if the OS does not exist, a similar system can be configured by changing the portion described as the OS in the embodiment to a driver layer or a software for assisting it.

Also, in the above-mentioned description, the embodiments has been described in which a device for the exclusive control is installed in the external device control driver on each process. However, the exclusive control may be also carried out on a particular processor and an interruption report destination may be set.

According to the SMP system of the present invention, the multi-processor system can be applied to the OS and hardware for a single processor, and an interruption response time for an access request from an external device can be further made equal to that of the single processor system.

## Claims

1. A multi-processor system comprising:
an interrupt controller (104) configured to store a table indicating a set of an external device issuing an access request and a processor corresponding to said access request; and
a plurality of processors (101), on each of which an operating system (OS) is executed,
wherein a first processor of said plurality of processors receives said access request from said external device through said interrupt controller; and
a second processor of said plurality of processors receives said access request from said external device without passing through said interrupt controller.

2. The multi-processor system according to claim 1, further comprising:
an external device controller connected to said external device,
wherein said access request is transferred from said external device to said first processor through said external device controller and said interrupt controller, and
said access request is transferred from said external device to said second processor through said external device controller without passing through said interrupt controller.

3. The multi-processor system according to claim 1 or 2, wherein each of said first and second processors has a same configuration, and comprises:
an external device control driver configured to control said external device;
an interruption processing driver configured to issue an interruption process request to said OS in response to said access request from said external device; and
an driver arbitration section configured to arbitrate between said external device control drivers of said plurality of processors.

4. The multi-processor system according to any of claims 1 to 3, wherein said first and second processors are connected to each other and operate individually and independently.

5. The multi-processor system according to any of claims 1 to 4, wherein said OS is for a single processor system and is installed in each of said first and second processors.

6. The multi-processor system according to any of claims 1 to 5, wherein said first processor starts access to said external device in response to said access request.

7. The multi-processor system according to any of claims 1 to 5, wherein said second processor directly accesses said external device when said external device control driver monitors said external device and detects that said external device is set to a state equivalent to issuance of said access request.

8. The multi-processor system according to claim 3, wherein said driver arbitration section determines whether said table is registered in said interrupt controller.

9. A method of distributing an interruption in an multi-processor system, comprising:
receiving an access request destined for a first or second processor of a plurality of processors from an external device;
sending said access request to said first processor through an interrupt controller in an interruption mode; and
sending said access request to said second processor in a monitor mode without passing through said interrupt controller.

10. The method according to claim 9, wherein said first and second processors are connected to each other and operate individually and independently.

11. The method according to claims 9 or 10, wherein an operating system (OS) is for a single processor system, and is installed in each of said first and second processors.

12. The method according to claim 9, further comprising:
starting access to said external device from said first processor in response to said access request in said interruption mode.

13. The method according to any of claims 10 to 12, further comprising:
directly accessing said external device from said second processor in said monitor mode.

14. The method according to claim 9, wherein said sending said access request to said first processor comprises:
sending said access request from said external device to said first processor through an external device controller and said interrupt controller, and
said sending said access request to said second processor comprises:
sending said access request from said external device to said second processor through said external device controller without passing through said interrupt controller.
